# EUROPÄISCHE PATENTSCHRIFT

(11) **EP 1 077 847 B1**
(45) Veröffentlichungstag und Bekanntmachung des Hinweises auf die Patenterteilung: **05.03.2003**
(21) Anmeldenummer: 99924933.7
(22) Anmeldetag: 11.05.1999
(51) Int. Cl.: B60T 7/12, B60T 13/68, B60K 31/06

(54) **HYDRAULISCHE BREMSANLAGE FÜR REGEL- UND KOMFORTBREMSUNGEN**
HYDRAULIC BRAKE SYSTEM FOR REGULATED AND COMFORTABLE BRAKING
SYSTEME DE FREINAGE HYDRAULIQUE POUR FREINAGES REGULES ET CONFORTABLES

(30) Priorität: 12.05.1998 DE 19821180; 02.11.1998 DE 19850386
(43) Veröffentlichungstag der Anmeldung: 28.02.2001
(73) Patentinhaber: Continental Teves AG & Co. oHG, 60488 Frankfurt am Main (DE)
(72) Erfinder: KLEIN, Andreas, D-61350 Bad Homburg (DE)
(86) Internationale Anmeldenummer: EP9903221
(87) Internationale Veröffentlichungsnummer: WO99058380

(56) Entgegenhaltungen:
- DE-A- 4 335 676
- DE-A- 19 542 654
- DE-A- 19 545 010

## Beschreibung

Die Erfindung betrifft eine hydraulische Bremsanlage für Regel- und Komfortbremsungen, mit einer Hydraulikpumpe zum Aufbau eines eine Bremsung bewirkenden Hydraulikdrucks sowie einer Ventileinrichtung, über die der Hydraulikdruck abbaubar ist.

Eine solche hydraulische Bremsanlage ist aus der De 195 45 010 A bekannt, wobei die Ventileinrichtung ein elektromagnetisch betätigbares 2/2 Wegeventil ist.

Hydraulische Bremsanlagen werden in zunehmendem Maße mit Einrichtungen ausgestattet, mit denen auch fremdgesteuerte Komfortbremsungen durchgeführt werden können. Im Gegensatz zu einer durch einen Fahrer bewirkten Regelbremsung, die im allgemeinen mit einer Antriebs- und/oder Bremsschlupfregelung beaufschlagt wird, wird eine Komfortbremsung zum Beispiel durch einen Tempomat aktiviert. Ein Problem hierbei besteht jedoch darin, daß eine solche Komfortbremsung mit dosierter Bremskraft durchgeführt werden muß, da ansonsten der Tempomat nicht mit ausreichender Genauigkeit und Stetigkeit betrieben werden kann.

Der Erfindung liegt deshalb die Aufgabe zugrunde, eine hydraulische Bremsanlage der eingangs genannten Art zu schaffen, mit der zur Durchführung von Komfortbremsungen ein in kleinen Schritten kontinuierlich regelbarer Bremsdruck ausgeübt werden kann.

Eine erste Lösung diese Aufgabe besteht bei einer hydraulischen Bremsanlage der genannten Art gemäß Anspruch 1 darin, daß die Ventileinrichtung ein analoges Ventil ist und daß das analoge Ventil und die Hydraulikpumpe durch eine Steuereinrichtung in der Weise ansteuerbar sind, daß der Bremsdruck für eine Komfortbremsung im wesentlichen stufenlos erhöht oder vermindert werden kann.

Eine zweite Lösung dieser Aufgabe besteht gemäß Anspruch 6 darin, daß die Ventileinrichtung durch ein für jede Radbremse vorgesehenes analoges Dreiwegeventil gebildet ist, deren Eingänge mit der Druckseite der Hydraulikpumpe verbunden sind, und deren erster Ausgang jeweils mit einer Radbremse und deren zweite Ausgänge mit einer Niederdruckseite der Bremsanlage verbunden sind, wobei die Dreiwegeventile und die Hydraulikpumpe durch eine Steuereinrichtung in der Weise ansteuerbar sind, daß der Bremsdruck für eine Komfortbremsung im wesentlichen stufenlos erhöht oder vermindert werden kann.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von zwei bevorzugten Ausführungsformen anhand der Zeichnung. Es zeigt:
Fig. 1 ein Prinzipschaltbild der ersten Ausführungsform und
Fig. 2 ein Prinzipschaltbild der zweiten Ausführungsform.

In den beiden Figuren ist jeweils nur ein Bremskreis 100 dargestellt, der auf zwei Radbremsen 11, 14 eines Fahrzeugs einwirkt. Der jeweils andere Bremskreis für die beiden anderen Radbremsen ist identisch aufgebaut und wurde deshalb aus Gründen der Übersichtlichkeit weggelassen.

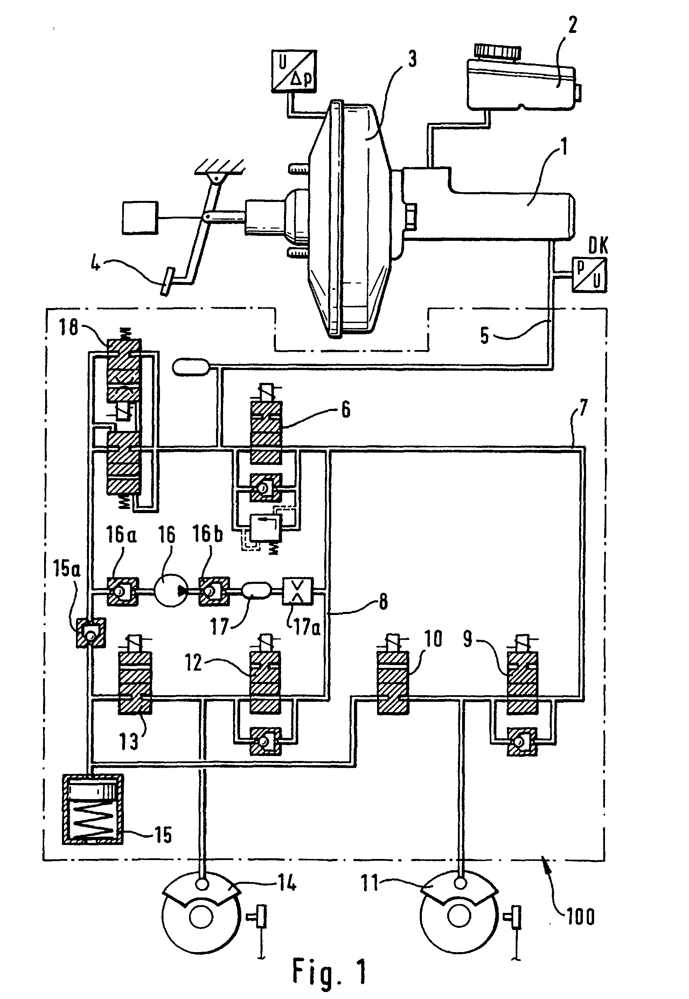

Die Bremskreise werden gemäß Figur 1 von einem Hauptzylinder 1 beaufschlagt, der über einen Hydraulikvorrat 2 mit Hydraulikflüssigkeit versorgt wird. Der Hauptzylinder 1 wird über einen Bremskraftverstärker 3 mit einem Bremspedal 4 betätigt.

An den Hauptzylinder 1 ist an eine Bremsleitung 5 des Bremskreises 100 angeschlossen, die über ein analoges, stromlos offenes Ventil 6 geführt ist und sich an dessen Ausgang in einen ersten Bremszweig 7 und einen zweiten Bremszweig 8 verzweigt. Der erste Bremskreis führt über ein erstes, stromlos offenes Einlaßventil 9 in die erste Radbremse 11, während der zweite Bremszweig 8 über ein zweites, stromlos offenes Einlaßventil 12 mit der zweiten Radbremse 14 verbunden ist.

Über ein erstes, stromlos geschlossenes Auslaßventil 10 an der ersten Radbremse 11 ist eine Verbindung mit einer Niederdruckseite des Bremskreises herstellbar. Gleiches gilt für ein zweites, stromlos geschlossenes Auslaßventil 13 an der zweiten Radbremse 14. Die Niederdruckseite wird von einem Niederdruckspeicher 15 beaufschlagt und ist über ein erstes Rückschlagventil 15a sowie ein erstes, stromlos geschlossenes Trennventil 18 mit dem Hydraulikvorrat 2 verbindbar.

Mit der Niederdruckseite ist außerdem über ein zweites Rückschlagventil 16a die Ansaugseite einer Hydraulikpumpe 16 verbunden. Der Druckausgang dieser Pumpe führt über ein drittes Rückschlagventil 16b, eine Dämpfungskammer 17, sowie eine Blende 17a in die beiden Bremszweige 7, 8.

Im Hinblick auf eine von einem Fahrer bewirkte Regelbremsung (d.h. eine Betätigung des Bremspedals 4) entspricht die Funktion dieser Ausführungsform derjenigen von bekannten Bremskreisen dieser Art, wobei zur Antriebs- bzw. Bremsschlupfregelung mittels Sensoren an jeder Radbremse die Hydraulikpumpe und die betreffenden Einlaß- und Auslaßventile entsprechend angesteuert werden.

Zur Durchführung einer Komfortbremsung, zum Beispiel durch einen Tempomat, dienen in erster Linie die Hydraulikpumpe 16 sowie das analoge Ventil 6. Die Hydraulikpumpe 16 bewirkt dabei einen Aufbau des Bremsdruckes in den Bremszweigen 7, 8, während über das analoge Ventil 6 der Bremsdruck abbaubar ist. Diese Veränderungen des Bremsdruckes erfolgen stufenlos, indem die Hydraulikpumpe gepulst betrieben bzw. das Analogventil allmählich und kontrolliert durch Querschnittsvergrößerung geöffnet wird.

Im einzelnen wird bei einem Druckaufbau das analoge Ventil 6 geschlossen und das erste Trennventil 18 geöffnet. Die Hydraulikpumpe 16 kann dann Hydraulikflüssigkeit aus dem an den Hauptzylinder 1 angeschlossenen Hydraulik-Vorratsbehälter 2 ansaugen und in die beiden Bremszweige 7, 8 drücken. Bei einem Druckabbau wird das erste Trennventil 18 geschlossen, die Hydraulikpumpe 16 deaktiviert und das analoge Ventil 6 allmählich geöffnet.

Diese beiden Vorgänge können auch permanent und alternierend ablaufen, so daß eine kontinuierliche Druckregelung in kleinen Schritten möglich ist.

Das analoge Ventil ist vorzugsweise ein Sitzventil, dessen Magnetantrieb proportionalisiert ist.

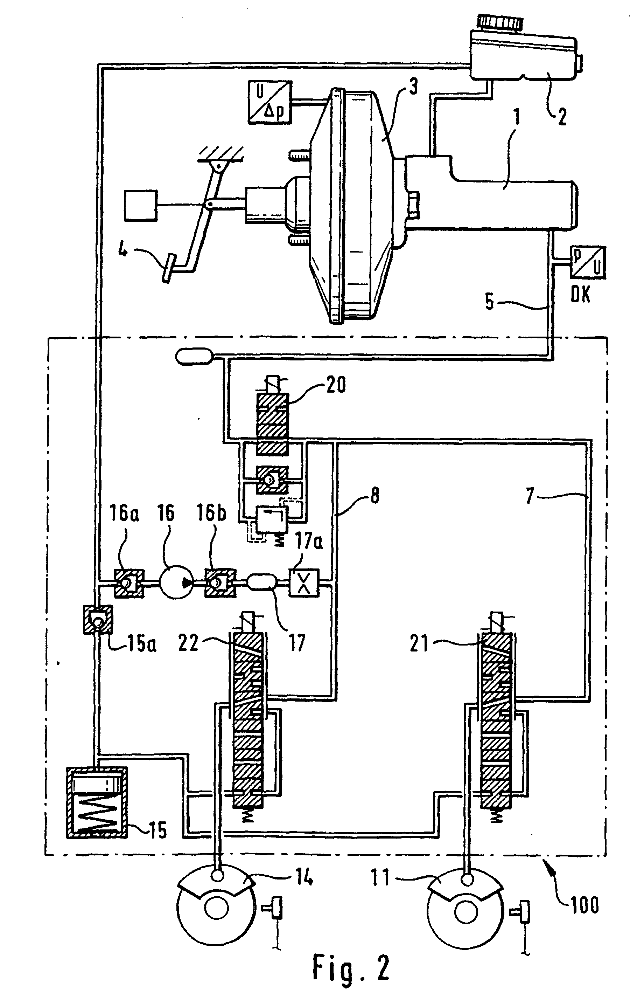

Figur 2 zeigt eine zweite Ausführungsform der Erfindung. Auch hierbei werden die beiden Radbremsen 11 und 14 über den Bremskreis 100 beaufschlagt, indem die auf das Bremspedal 4 ausgeübte Kraft von dem Bremskraftverstärker 3 verstärkt und über den Hauptzylinder 1, der mit dem Hydraulikvorrat 2 verbunden ist, in die Hydraulikflüssigkeit übertragen wird. Der Bremskreis 100 ist über die Bremsleitung 5 an den Hauptzylinder 1 angeschlossen. Die Bremsleitung 5 ist über ein zweites, stromlos offenes Trennventil 20 in die beiden Bremszweige 7, 8 geführt. Der erste Bremszweig 7 ist mit dem Eingang eines ersten Dreiwegeventils 21 verbunden, an dessen erstem Ausgang die Radbremse 11 anliegt und dessen zweiter Ausgang mit der Niederdruckseite verbunden ist. Der zweite Bremszweig 8 ist an ein zweites Dreiwegeventil 22 geführt, dessen erster Ausgang mit der Radbremse 14 und dessen zweiter Ausgang mit der Niederdruckseite verbunden ist.

Die analogen Dreiwegeventile sind vorzugsweise Schieberventile mit integriertem Sitz.

Der Niederdruckspeicher 15 beaufschlagt die Niederdruckseite und ist über das erstes Rückschlagventil 15a direkt mit dem Hydraulikvorrat 2 verbunden. Auch bei dieser Ausführungsform liegt die Ansaugseite der Hydraulikpumpe 16 über dem zweiten Rückschlagventil 16a an der Niederdruckseite an. Die Druckseite der Hydraulikpumpe 16 ist über das dritte-Rückschlagventil 16b sowie die Dämpfungskammer 17 mit nachgeschalteter Blende 17a in die beiden Bremszweige 7, 8 geführt.

Bei einer von einem Fahrer ausgeübten Regelbremsung wird der Bremsdruck über die Bremsleitung 5 und das zweite, stromlos offene Trennventil 20 in die Bremszweige 7, 8 geleitet und beaufschlagt über das erste und zweite Dreiwegeventil 21, 22 die zugeordnete Radbremse 11 bzw. 14. Eine Antriebs- und Bremsschlupfregelung erfolgt wiederum durch die an sich bekannte Ansteuerung der Hydraulikpumpe 16 sowie des zweiten Trennventils 20 und des betreffenden Dreiwegeventils 21 bzw. 22, wenn an dem zugeordneten Rad ein Schlupf erfaßt wurde. Das Dreiwegeventil erfüllt in diesem Fall die Funktionen des Einlaß- und des Auslaßventils 9, 10 bzw. 12, 13 gemäß Figur 1.

Im Falle einer Komfortbremsung wird zur Druckerhöhung das zweite Trennventil 20 geschlossen und die Hydraulikpumpe 16 gepulst betrieben, so daß über die Dreiwegeventile 21, 22 der Bremsdruck in den Radbremsen 11, 14 analog, das heißt in kleinen Stufen allmählich aufgebaut wird. Zum Druckabbau wird die Hydraulikpumpe 16 deaktiviert, und die Dreiwegeventile werden schrittweise kontinuierlich so angesteuert, daß jeweils der erste Ausgang analog, das heißt mit zunehmendem Querschnitt, mit dem zweiten Ausgang verbunden wird, so daß sich der Bremsdruck allmählich in die Niederdruckseite entlädt.

Auch bei dieser zweiten Ausführungsform kann der Druckaufbau und der Druckabbau permanent und alternierend ablaufen, so daß eine kontinuierliche Druckregelung in kleinen Schritten möglich ist.

Darüberhinaus ist es mit beiden Ausführungsformen auch möglich, die Druckmodulation dazu zu verwenden, eine von einem Fahrer ausgelöste Regelbremsung zu unterstützen, und zwar insbesondere oberhalb eines Ansteuerpunktes eines Boosters.

### Bezugszeichenliste:

- 1 -: Hauptzylinder
- 2 -: Hydraulik-Vorratsbehälter
- 3 -: Bremskraftverstärker
- 4 -: Bremspedal
- 5 -: Bremsleitung
- 6 -: analoges Ventil
- 7 -: erster Bremszweig
- 8 -: zweiter Bremszweig
- 9 -: erstes Einlaßventil
- 10 -: erstes Auslaßventil
- 11-: erste Radbremse
- 12 -: zweites Einlaßventil
- 13 -: zweites Auslaßventil
- 14 -: zweite Radbremse
- 15 -: Niederdruckspeicher
- 15a -: erstes Rückschlagventil
- 16 -: Hydraulikpumpe
- 16a -: zweites Rückschlagventil
- 16b -: drittes Rückschlagventil
- 17 -: Dämpfungskammer
- 17a -: Blende
- 18 -: erstes Trennventil
- 20 -: zweites Trennventil
- 21 -: erstes Dreiwegeventil
- 22 -: zweites Dreiwegeventil
- 100 -: Bremskreis

## Patentansprüche

1. Hydraulische Bremsanlage für Regel- und Komfortbremsun gen, mit einer Hydraulikpumpe (16) zum Aufbau eines eine Bremsung bewirkenden Hydraulikdrucks sowie einer Ven tileinrichtung, über die der Hydraulikdruck abbaubar ist,
**dadurch gekennzeichnet, daß** die Ventileinrichtung ein analoges Ventil (6) ist und daß das analoge Ventil und die Hydraulikpumpe (16) durch eine Steuereinrichtung in der Weise ansteuerbar sind, daß der Bremsdruck für eine Komfortbremsung im wesentlichen stufenlos erhöht oder vermindert werden kann.

2. Hydraulische Bremsanlage nach Anspruch 1,
**dadurch gekennzeichnet, daß** das analoge Ventil (6) zwischen eine Druckseite der Hydraulikpumpe (16) und eine Niederdruckseite der Bremsanlage geschaltet ist, wobei das analoge Ventil (6) zum Abbau des Bremsdruckes durch die Steuereinrichtung stufenweise geöffnet werden kann.

3. Hydraulische Bremsanlage nach Anspruch 2,
**dadurch gekennzeichnet, daß** eine Saugseite der Hy draulikpumpe (16) über ein erstes Trennventil (18) mit einem Hydraulik-Vorratsbehälter (2) verbindbar ist, wobei zur Bremsdruckerhöhung durch die Steuereinrichtung das analoge Ventil (6) geschlossen und das erste Trennventil (18) geöffnet werden kann.

4. Hydraulische Bremsanlage nach einem der vorhergehenden Ansprüche,
**dadurch gekennzeichnet, daß** das analoge Ventil (6) stromlos offen und das erste Trennventil (18) stromlos geschlossen ist.

5. Hydraulische Bremsanlage nach einem der vorhergehenden Ansprüche,
**dadurch gekennzeichnet, daß** das analoge Ventil (6) ein Sitzventil ist, dessen Magnetantrieb proportionalisiert ist.

6. Hydraulische Bremsanlage für Regel- und Komfortbremsun gen, mit einer Hydraulikpumpe (16) zum Aufbau eines eine Bremsung bewirkenden Hydraulikdrucks sowie einer Ven tileinrichtung, über die der Hydraulikdruck abbaubar ist,
**dadurch gekennzeichnet, daß** die Ventileinrichtung durch ein für jede Radbremse (11; 14) vorgesehenes analoges Dreiwegeventil (21; 22) gebildet ist, deren Eingänge mit der Druckseite der Hydraulikpumpe (16) verbunden sind, deren erster Ausgang jeweils an eine Radbremse (11; 14) geführt ist, und deren zweite Ausgänge mit einer Nieder druckseite der Bremsanlage verbunden sind, wobei die Dreiwegeventile (21, 22) und die Hydraulikpumpe (16) durch eine Steuereinrichtung in der Weise ansteuerbar sind, daß der Bremsdruck für eine Komfortbremsung im we sentlichen stufenlos erhöht oder vermindert werden kann.

7. Hydraulische Bremsanlage nach Anspruch 6,
**dadurch gekennzeichnet, daß** die Ansaugseite der Hy draulikpumpe (16) direkt mit einem Hydraulik-Vorratsbehälter (2) verbunden ist.

8. Hydraulische Bremsanlage nach Anspruch 6 oder 7,
**dadurch gekennzeichnet, daß** zum Abbau des Bremsdruckes an einem der analogen Dreiwegeventile (21; 22) durch die Steuereinrichtung stufenweise der erste Ausgang mit dem zweiten Ausgang verbindbar ist.

9. Hydraulische Bremsanlage nach einem der Ansprüche 6 bis 8,
**dadurch gekennzeichnet, daß** mit der Niederdruckseite ein Niederdruckspeicher (15) verbunden ist und daß die Steuereinrichtung zur Erhöhung oder Verminderung des Bremsdruckes an mindestens einem der analogen Drei wegeventile (21; 22) durch eine Antriebs- und / oder Bremsschlupfregelung ansteuerbar ist.

10. Hydraulische Bremsanlage nach einem der Ansprüche 6 bis 9,
**dadurch gekennzeichnet, daß** das mindestens eine analoge Dreiwegeventil (21, 22) ein Schieberventil mit integriertem Sitz ist.

11. Hydraulische Bremsanlage nach einem der vorhergehenden Ansprüche,
**dadurch gekennzeichnet, daß** die Hyraulikpumpe (16) durch die Steuereinheit gepulst betreibbar ist.

12. Hydraulische Bremsanlage nach einem der vorhergehenden Ansprüche,
**dadurch gekennzeichnet, daß** die Ventileinrichtung (6; 21, 22) und die Hydraulikpumpe (16) mit der Steuerein richtung zur Realisierung einer kontinuierlichen Druck regelung permanent betreibbar ist.

13. Hydraulische Bremsanlage nach einem der vorhergehenden Ansprüche,
**dadurch gekennzeichnet, daß** die Steuereinrichtung zur Unterstützung einer manuellen Betätigung der Bremsan Lage aktivierbar ist.

## Claims

1. Hydraulic brake system for controlled and comfort braking operations including a hydraulic pump (16) for build-up of hydraulic pressure that effects braking and a valve assembly by way of which the hydraulic pressure can be reduced,
**characterized in that** the valve assembly is an analog valve (6), and **in that** the analog valve and the hydraulic pump (16) are adapted to be actuated by a control device to such effect that the brake pressure for comfort braking can be increased or decreased in an essentially continuously variable manner.

2. Hydraulic brake system as claimed in claim 1,
**characterized in that** the analog valve (6) is interposed between a pressure side of the hydraulic pump (16) and a low-pressure side of the brake system, and the analog valve (6) can be opened in steps by the control device for brake pressure reduction.

3. Hydraulic brake system as claimed in claim 2,
**characterized in that** a suction side of the hydraulic pump (16) is connectable to a hydraulic supply reservoir (2) by way of a first separating valve (18), and the analog valve (6) can be closed and the first separating valve (18) opened for brake pressure increase by way of the control device.

4. Hydraulic brake system as claimed in any one of the preceding claims,
**characterized in that** the analog valve (6) is normally open and the first separating valve (18) is normally closed.

5. Hydraulic brake system as claimed in any one of the preceding claims,
**characterized in that** the analog valve (6) is a seat valve having a proportionated magnet drive.

6. Hydraulic brake system for controlled and comfort braking operations including a hydraulic pump (16) for build-up of hydraulic pressure that effects braking and a valve assembly by way of which the hydraulic pressure can be reduced,
**characterized in that** the valve assembly is configured as an analog three-way valve (21; 22) provided for each wheel brake (11; 14), the inlets of said valve being connected to the pressure side of the hydraulic pump (16), and the first outlet thereof being respectively led to a wheel brake (11; 14) and the second outlets thereof being connected to a low-pressure side of the brake system, wherein the three-way valves (21, 22) and the hydraulic pump (16) are actuatable by a control device to such effect that the brake pressure for comfort braking can be increased or decreased in an essentially continuously variable manner.

7. Hydraulic brake system as claimed in claim 6,
**characterized in that** the suction side of the hydraulic pump (16) is directly connected to a hydraulic supply reservoir (2).

8. Hydraulic brake system as claimed in claim 6 or 7,
**characterized in that** the first outlet is connectable stepwise to the second outlet at one of the analog three-way valves (21; 22) by way of the control device for reduction of the brake pressure.

9. Hydraulic brake system as claimed in any one of claims 6 to 8,
**characterized in that** a low-pressure accumulator (15) is connected to the low-pressure side, and **in that** the control device for increase or reduction of the brake pressure on at least one of the analog three-way valves (21; 22) is actuatable by a traction and/or brake slip control system.

10. Hydraulic brake system as claimed in any one of claims 6 to 9,
**characterized in that** the at least one analog three-way valve (21, 22) is a slide valve with an integrated seat.

11. Hydraulic brake system as claimed in any one of the preceding claims,
**characterized in that** the hydraulic pump (16) is operable by the control device in a pulsed manner.

12. Hydraulic brake system as claimed in any one of the preceding claims,
**characterized in that** the valve assembly (6; 21, 22) and the hydraulic pump (16) with the control device is permanently operable to achieve a continuous pressure control.

13. Hydraulic brake system as claimed in any one of the preceding claims,
**characterized in that** the control device is adapted to be activated for assisting a manual actuation of the brake system.

## Revendications

1. Système de freinage hydraulique pour des freinages régulés et confortables, avec une pompe hydraulique (16) pour établir une pression hydraulique produisant un freinage, et avec un dispositif formant soupape qui permet de supprimer la pression hydraulique,
**caractérisé en ce que** le dispositif formant soupape est une soupape analogique (6), et **en ce que** la soupape analogique et la pompe hydraulique (16) peuvent être asservies par un dispositif de commande de telle sorte que la pression de freinage peut être augmentée ou réduite essentiellement sans à-coups, en vue d'un freinage confortable.

2. Système de freinage hydraulique selon la revendication 1, **caractérisé en ce que** la soupape analogique (6) est montée entre un côté de refoulement de la pompe hydraulique (16) et un côté basse pression du système de freinage, la soupape analogique (6) pouvant être ouverte progressivement par le dispositif de commande afin de supprimer la pression de freinage.

3. Système de freinage hydraulique selon la revendication 2, **caractérisé en ce qu'**un côté d'aspiration de la pompe hydraulique (16) peut être relié par l'intermédiaire d'une première soupape de séparation (18) à un réservoir de liquide hydraulique (2), le dispositif de commande pouvant fermer la soupape analogique (6) et ouvrir la première soupape de séparation (18) afin d'augmenter la pression de freinage.

4. Système de freinage hydraulique selon l'une quelconque des revendications précédentes, **caractérisé en ce que** la soupape analogique (6) est ouverte en l'absence de courant électrique et la première soupape de séparation (18) est fermée en l'absence de courant électrique.

5. Système de freinage hydraulique selon l'une quelconque des revendications précédentes, **caractérisé en ce que** la soupape analogique (6) est une soupape à siège dont l'entraînement magnétique est rendu proportionnel.

6. Système de freinage hydraulique pour des freinages régulés et confortables, avec une pompe hydraulique (16) pour. établir une pression hydraulique produisant un freinage, et avec un dispositif formant soupape qui permet de supprimer la pression hydraulique,
**caractérisé en ce que** le dispositif formant soupape est formé par une soupape analogique (21 ; 22) à trois voies prévue pour chaque frein de roue (11 ; 14), soupapes dont les entrées sont reliées au côté de refoulement de la pompe hydraulique (16), dont la première sortie est respectivement dirigée sur un frein de roue (11 ; 14), et dont les deuxièmes sorties sont reliées à un côté basse pression du système de freinage, les soupapes à trois voies (21, 22) et la pompe hydraulique (16) pouvant être asservies par un dispositif de commande de telle sorte que la pression de freinage peut être augmentée ou réduite essentiellement sans à-coups, en vue d'un freinage confortable.

7. Système de freinage hydraulique selon la revendication 6, **caractérisé en ce que** le côté d'aspiration de la pompe hydraulique (16) est directement relié à un réservoir de liquide hydraulique (2).

8. Système de freinage hydraulique selon la revendication 6 ou 7, **caractérisé en ce que**, afin de supprimer la pression de freinage sur une des soupapes analogiques (21 ; 22) à trois voies, le dispositif de commande peut relier progressivement la première sortie à la deuxième sortie.

9. Système de freinage hydraulique selon l'une quelconque des revendications 6 à 8, **caractérisé en ce qu'**un accumulateur basse pression (15) est relié au côté basse pression, et **en ce que** le dispositif de commande peut être asservi par une régulation du glissement d'entraînement et/ou de freinage afin d'augmenter ou de réduire la pression de freinage sur au moins une des soupapes analogiques (21 ; 22) à trois voies.

10. Système de freinage hydraulique selon l'une quelconque des revendications 6 à 9, **caractérisé en ce que** la soupape analogique (21 ; 22) à trois voies au moins unique est une soupape à tiroir à siège intégré.

11. Système de freinage hydraulique selon l'une quelconque des revendications précédentes, **caractérisé en ce que** la pompe hydraulique (16) peut être exploitée en fonctionnement pulsé par l'unité de commande.

12. Système de freinage hydraulique selon l'une quelconque des revendications précédentes, **caractérisé en ce que** le dispositif formant soupape (6 ; 21 ; 22) et la pompe hydraulique (16) peuvent être exploités en permanence par le dispositif de commande afin de réaliser une régulation de pression continue.

13. Système de freinage hydraulique selon l'une quelconque des revendications précédentes, **caractérisé en ce que** le dispositif de commande peut être activé pour assister un actionnement manuel du système de freinage.
